# FASCICULE DE BREVET EUROPEEN

(11) **EP 3 393 789 B1**
(45) Date de publication et mention de la délivrance du brevet: **01.12.2021**
(21) Numéro de dépôt: 17711253.9
(22) Date de dépôt: 24.02.2017
(51) Int. Cl.: B32B 7/06, B32B 7/12, E04F 15/10, B32B 27/08, B32B 5/02, B32B 27/06, B32B 27/12, B32B 27/18, B32B 27/36, B32B 3/08

(54) **STRUCTURE MULTICOUCHE POUR LA RÉALISATION D'UN REVÊTEMENT DE SOL INTELLIGENT, EN POSE COLLE, DONT LA RÉNOVATION EST FACILITÉE**
MEHRSCHICHTIGE STRUKTUR ZUR ERZEUGUNG EINES VERKLEBBAREN FUSSBODENBELAGS, DER EINFACHER ZU RENOVIEREN IST
MULTILAYER STRUCTURE FOR CREATING AN INTELLIGENT STUCK-DOWN FLOORCOVERING, WHICH IS EASIER TO RENOVATE

(30) Priorité: 07.03.2016 FR 1651860
(43) Date de publication de la demande: 31.10.2018
(73) Titulaire: GERFLOR, 69100 Villeurbanne (FR)
(72) Inventeur: FERLAY, Charles, 69770 MONTROTTIER (FR); RIVAT, Alain, 69170 LES SAUVAGES (FR)
(74) Mandataire: Cabinet Laurent & Charras
(86) Numéro de dépôt international: PCT/FR2017/050412
(87) Numéro de publication internationale: WO 2017/153657

(56) Documents cités:
- EP-A1- 2 891 555
- WO-A1-2013/044289
- FR-A1- 2 956 137
- US-A- 5 116 439

## Description

### DOMAINE TECHNIQUE

La présente invention concerne une structure multicouche pour la réalisation d'un revêtement de sol, ou similaire, chauffant, acoustique, compact, c'est-à-dire ayant des performances de résistance au poinçonnement et au roulage, et intelligent, c'est-à-dire intégrant des capteurs ou des électrodes pour apporter des fonctions de détection de personnes, de chauffage, ou de récupération d'énergie par exemple.

L'invention concerne notamment une structure multicouche pour la réalisation d'un revêtement de sol en pose collée, dont la rénovation est facilitée. La structure multicouche selon l'invention peut se présenter sous la forme d'un panneau, d'une dalle, d'une lame, ou similaire, ou bien se présenter sous la forme d'une bande enroulée.

L'invention trouve une application avantageuse dans la réalisation d'une structure multicouche souple, hétérogène et présentée en rouleau pour la réalisation d'un revêtement de sol dont la rénovation est rapide et peu coûteuse.

### ART ANTERIEUR

Il est connu de l'état de la technique une structure multicouche pour la réalisation d'un revêtement de sol. Cette structure multicouche comprend, d'une manière générale, une couche supérieure de surface dont les fonctions principales sont la résistance à l'usure, la facilité de nettoyage et l'aspect décoratif, liée à une sous-couche inférieure destinée à être collée sur le sol ou similaire et à assurer une fonction intelligente, c'est-à-dire intégrant des capteurs pour apporter des fonctions de détection de personnes ou des capteurs piézoélectriques pour fournir de l'énergie électrique à un bâtiment par exemple, et éventuellement, une fonction amortissante, d'isolation acoustique, chauffante, etc.

Lors de la mise en œuvre en pose collée, la structure multicouche est collée sur le support d'origine, telle qu'une chape ou un ragréage, au moyen d'une colle acrylique.

La couche supérieure du revêtement de sol, destinée à supporter les contraintes de trafic, s'use plus ou moins vite. Lorsque la couche supérieure est usée, il est nécessaire de rénover le revêtement de sol, ce qui consiste notamment à le déposer et à le remplacer.

Lors de cette rénovation, l'ancienne structure multicouche est arrachée et la colle est grattée, par exemple au moyen d'une machine spéciale, afin de revenir au support d'origine. Cette opération est lourde et génère des nuisances, notamment du bruit et de la poussière. De plus, le local recevant le revêtement doit être condamné le temps des travaux. La dépose est fastidieuse, et il arrive parfois que le support d'origine soit détérioré, entrainant alors la reprise dudit support. De plus, le support doit ensuite être préparé pour recevoir la structure multicouche de remplacement.

Pour remédier à ces inconvénients, les fabricants de revêtements de sols ont développé des solutions du type en pose libre, sans collage, par l'intermédiaire de dalles ou de lames clipsées, ou de rouleaux maintenus en périphérie par des adhésifs doubles faces. Ainsi, lors de la rénovation, les dalles ou lames sont déclipsées et remplacées rapidement sans problème particulier de poussière ou de bruit.

Cependant, ces solutions présentent plusieurs inconvénients. Elles sont notamment inadaptées au trafic lourd, tel que celui présent par exemple dans les hôpitaux ou les écoles, les revêtements de sols ne sont pas parfaitement étanches à l'eau de nettoyage et, suivant le classement des locaux, ces solutions ne peuvent pas être déployées.

Un autre inconvénient de l'état de la technique réside dans le fait que la rénovation entraine des coûts relativement importants du fait de la mise en place d'un nouveau revêtement de sol intelligent.

FR2956137A1 divulgue un sol instrumenté pour la détection de présence, rapporté sur une dalle et comprenant: une sous-couche réalisée dans un matériau électriquement isolant, posée sur la dalle; des capteurs capacitifs posés sur la sous-couche; une chape posée sur la sous-couche isolante et recouvrant les capteurs.

US5116439A décrit un procédé et appareil pour permettre un enlèvement facile d'un revêtement de sol par l'utilisation d'une bande détachable à deux composants fixée entre le revêtement de sol et le sol de telle sorte que le revêtement de sol puisse être décollé du sol en laissant une partie de la bande détachable fixée au revêtement de sol et l'autre partie de la bande détachable fixée au sol, permettant ainsi la réutilisation du revêtement de sol dans un autre endroit et permettant l'installation facile d'un nouveau revêtement de sol sur la partie de la bande détachable fixée au sol.

### EXPOSE DE L'INVENTION

L'un des buts de l'invention est donc de proposer une structure multicouche pour la réalisation d'un revêtement de sol ou similaire, intelligent, en pose collée, permettant d'atteindre des niveaux de classement élevés en termes de résistance au trafic et d'étanchéité, tout en garantissant une rénovation rapide, sans nuisance, et peu onéreuse de la structure multicouche.

A cet effet, il est proposé une structure multicouche conforme à celle de l'état de la technique en ce qu'elle comprend une couche amovible constituée d'au moins une couche de surface en matière plastique, ladite couche amovible étant liée à une sous-couche destinée à être collée sur le sol ou similaire constituée d'au moins un pli comprenant des électrodes ou des capteurs électroniques ou similaires intégrant des fonctions de chauffage, de détection de personnes, ou de récupération d'énergie.

Selon l'invention la couche amovible comprend une couche d'adhésif sur sa face envers en regard avec la sous-couche, le pouvoir d'adhérence de la couche d'adhésif à la couche amovible est supérieur au pouvoir d'adhérence de la couche d'adhésif à la sous-couche de sorte que l'adhésif ne migre pas sur la sous-couche lorsqu'il est appliqué sur celle-ci. La couche amovible est donc pelable pour pouvoir être retirée et remplacée, et lorsque celle-ci est retirée, la sous-couche forme un support propre apte à recevoir une nouvelle couche amovible.

L'invention fournit une structure multicouche qui intègre des fonctions électriques et/ou électroniques, tout en garantissant des fonctions acoustiques et/ou mécaniques performantes, et dont la rénovation est facilitée et peu onéreuse car seule la couche amovible est remplacée. L'avantage de l'invention est, en effet, de permettre de dissocier, lors de la rénovation du revêtement, les parties fonctionnelles intelligentes non usées présentant toujours un bon niveau de performances, des parties usées constituant la couche amovible servant également de couche décorative.

De cette manière, il est possible de renouveler plus souvent le revêtement de sol, à moindre coût, sans nuisance, et avec une immobilisation très courte du local.

En effet, dans l'état de la technique actuelle, le développement de nouvelles fonctionnalités liées au sol, telles que l'intégration de fonctions électroniques (détection de personne, gestion domotique du bâtiment) et des fonctions électriques (sol chauffant) sont mal prises en compte en vue de leur rénovation future. Selon l'état de la technique, lors de la rénovation, les fonctionnalités des revêtements de sol intactes sont retirées en même temps que le reste du revêtement de sol endommagé, ce qui engendre un surcoût dans la rénovation.

La sous-couche n'est pratiquement jamais endommagée et garde ses performances de sorte que celle-ci peut être conservée pour continuer à remplir sa fonction.

L'invention se propose alors de séparer les fonctions du revêtement de sol dites pérennes, telles que les fonctions acoustique, équilibrage, électrique, électronique, thermique de la partie remplaçable du revêtement, pour permettre une rénovation du revêtement rapide, sans nuisance et beaucoup moins onéreuse que celle de l'état de la technique.

En effet, la valeur ajoutée des revêtements de sols augmente lorsqu'ils intègrent des fonctions électroniques (détection de personne, détection d'eau, ...) ou des fonctions de chauffage. Ainsi, lors de la rénovation, il apparait dorénavant important que ces fonctions restent fonctionnelles et ne soient pas retirées. Cette configuration permet de diminuer fortement le coût de la rénovation.

De préférence, le pouvoir d'adhérence de la couche d'adhésif à la sous-couche est inférieur à 1 N/mm en pelage à 180 degrés.

De préférence, la sous-couche est réalisée dans une matière plastique et comprend entre 10 et 35% de plastifiant. Cette faible quantité de plastifiant est avantageuse car, lorsque la couche amovible est retirée, il n'y a aucune trace d'adhésif sur la sous-couche et elle n'est pas collante, contrairement avec une forte quantité de plastifiant par exemple de l'ordre de 60%. Ainsi, après retrait de la couche amovible, la sous-couche est propre et réutilisable directement, sans nécessiter d'opération de lavage.

L'invention permet de repartir d'un support propre, sans poussière, sans primarisation, ayant une bonne planéité, et sans dégradation, pour la pose d'une nouvelle couche amovible de surface et de décor.

D'une manière avantageuse, la couche d'adhésif est résistante à la migration de plastifiants, par exemple des plastifiants du PVC pouvant constituer la sous-couche. A cet effet, et selon une forme de réalisation particulière, des résines acryliques à base solvant peuvent être intégrées dans la composition de l'adhésif, pour résister aux plastifiants tels que Diisononyl Phtalate (DINP), Diisodecyl Phtalate (DIDP), Téréphtalate dioctylique (DOTP), 1,2-cyclohexane dicarboxylique acide diisononyl ester (DINCH), aux plastifiants de la famille des benzoates, aux plastifiants de la famille des adipates, au plastifiant commercialisé sous la Marque PEVALEN^{®} par la société Perstorp, ou encore à l'huile de soja epoxydée (HSE).

Selon une forme de réalisation particulière, la couche amovible comprend une couche de décor imprimée sur la face envers de la couche de surface.

Avantageusement, la couche amovible comprend une couche d'équilibrage de la couche amovible, permettant de limiter les déformations de ladite couche amovible en réaction à la dilatation ou à la contraction thermique. La couche d'équilibrage est liée à la face envers de la couche de surface. La couche d'équilibrage permet de maintenir la couche amovible à plat lorsque celle-ci est appliquée sur une sous-couche lors de la rénovation. La pose est rapide et aisée. A titre d'exemple, la couche d'équilibrage peut se présenter sous la forme d'une feuille de Polychlorure de Vinyle (PVC) plastifiée obtenue par broyage puis calandrage, ou bien par enduction de plastisol PVC.

De préférence, et pour augmenter les performances mécaniques et la résistance au poinçonnement et au roulage et permettre une stabilité dimensionnelle du revêtement de sol dans le temps, la couche amovible comprend une armature de renfort en textile, telle qu'une grille ou un voile de verre, noyée entre la couche de surface et la couche d'équilibrage.

La sous-couche de la structure multicouche selon l'invention peut être de tout type approprié, et sa composition dépend de la fonction à mettre en œuvre. La sous-couche est constituée d'au moins un pli comportant des électrodes ou des capteurs et comprend, par exemple, au moins une couche d'équilibrage de la sous-couche liée à la face inférieure du pli ou à la face supérieure du pli. La sous-couche peut comprendre deux couches d'équilibrage de la sous-couche, une première liée à la face inférieure du pli, et une deuxième liée à la face supérieure du pli. La sous-couche peut, par exemple, présenter une configuration compacte pour lui conférer une résistance mécanique performante. Par compacte, on entend que l'épaisseur de la sous-couche ne comprend pas de mousse. De plus, la sous-couche permet à la structure multicouche de se poser facilement à plat lors de la pose sur chantier du revêtement de sol, et de conserver cette mise à plat dans le temps.

Selon une autre forme de réalisation, la deuxième couche d'équilibrage est réalisée en mousse de polyuréthane permettant au revêtement de sol d'avoir des performances d'isolation acoustique.

D'une manière avantageuse, le pli se présente sous la forme d'une couche simple ou d'un assemblage de couches complexes. A titre d'exemple, le pli comprend, dans le sens de la couche amovible vers la sous-couche :
- une couche formée par un film de Polyéthylène téréphtalate (PET) ;
- une couche adhésive ;
- une couche comprenant des électrodes conductrices, par exemple fabriquées dans un feuillard de cuivre ou d'aluminium ;
- une couche adhésive ;
- une couche diélectrique permettant d'isoler électriquement le pli.

De préférence, et pour augmenter les performances mécaniques et la résistance au poinçonnement et au roulage, et permettre une stabilité dimensionnelle du revêtement de sol dans le temps, la sous-couche comprend une armature de renfort en textile noyée dans la face supérieure du pli, telle qu'une grille ou un voile de verre.

L'invention fournit également une couche de matière plastique destinée à être appliquée sur une sous-couche d'une structure multicouche conforme aux caractéristiques précitées. Selon l'invention, la couche de matière plastique comprend une face envers comprenant une couche d'adhésif dont le pouvoir d'adhérence à la couche de matière plastique est supérieur au pouvoir d'adhérence à la sous-couche avec laquelle il est destiné à venir en contact, ladite couche d'adhésif étant recouverte d'un film protecteur pelable.

De cette manière, la couche de matière plastique selon l'invention est destinée à la rénovation ou au changement de décor d'une structure multicouche selon l'invention. Ladite couche de matière plastique est notamment assimilée à la couche amovible de la structure multicouche selon l'invention.

### DESCRIPTION SOMMAIRE DES FIGURES

D'autres avantages et caractéristiques ressortiront mieux de la description qui va suivre, donnée à titre d'exemple non limitatif, en référence aux figures annexées dans lesquelles :
- la figure 1 illustre, de manière schématique et en coupe transversale, une première forme de réalisation d'un structure multicouche selon l'invention pour la réalisation d'un revêtement de sol ;
- la figure 2 est similaire à celle de la figure 1 et représente une deuxième forme de réalisation de la structure multicouche selon l'invention ;
- la figure 3 est similaire à celle de la figure 1 et représente une troisième forme de réalisation de la structure multicouche selon l'invention.

### DESCRIPTION DETAILLEE DE L'INVENTION

L'invention concerne une structure multicouche (1) pour la réalisation d'un revêtement de sol ou similaire, intelligent, c'est-à-dire intégrant des fonctions de chauffage, de détection de personnes, ou de récupération d'énergie. La structure multicouche (1) peut présenter tout type de forme, notamment en panneau, dalle, ou en rouleau. La structure multicouche (1) selon l'invention est destinée à la réalisation de revêtements de sols en pose collée, présentant des performances élevées en termes d'étanchéité et de résistance au trafic.

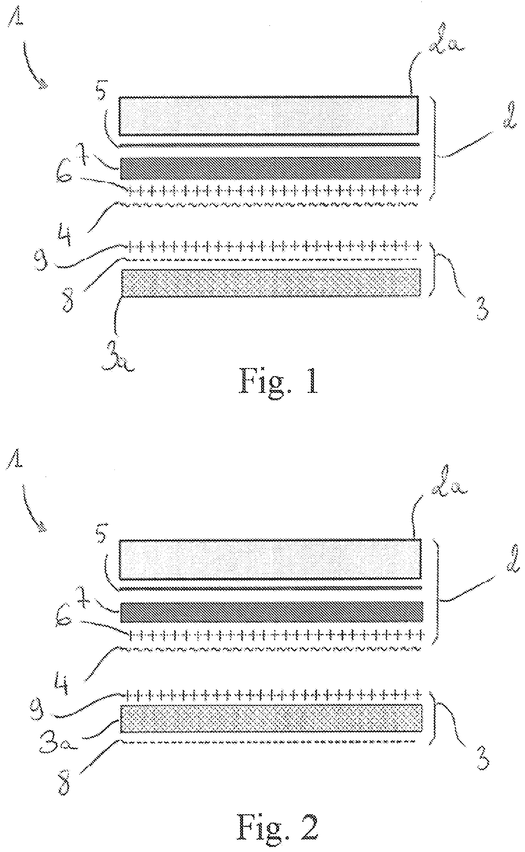

En référence à la figure 1, la structure multicouche (1) comprend une couche supérieure amovible (2) liée à une sous-couche inférieure (3) destinée à être collée sur le sol ou similaire. La sous-couche est constituée d'au moins un pli (8) comportant des électrodes ou des capteurs électroniques intégrant des fonctions de chauffage, de détection de personnes, ou de récupération d'énergie.

Selon l'invention, la couche amovible (2) comprend une couche d'adhésif (4) sur sa face envers en regard avec la sous-couche (3). Le pouvoir d'adhérence de la couche d'adhésif (4) à la couche amovible (2) est supérieur au pouvoir d'adhérence de la couche d'adhésif (4) à la sous-couche (3) de sorte que l'adhésif est non migrant sur la face supérieure de la sous-couche (3) avec laquelle il est en contact. Le pouvoir d'adhérence de la couche d'adhésif (4) à la sous-couche (3) est inférieur à 1 N/mm en pelage selon la norme NFEN ISO 24345 (pelage à 180 degrés). Avantageusement la sous-couche (3) est grainée pour homogénéiser, augmenter ou ajuster le pouvoir d'adhérence de la couche d'adhésif (4) sur la sous-couche (3). Bien entendu, la colle utilisée pour coller le revêtement sur le sol ou similaire doit présenter un pouvoir d'adhérence supérieur au pouvoir d'adhérence de la couche d'adhésif (4) à la sous-couche (3).

De cette manière, la rénovation est facilitée, seule la couche amovible (2) est remplacée. L'avantage de l'invention est de pouvoir dissocier, lors de la rénovation du revêtement, les parties fonctionnelles non usées constituées par la sous-couche (3), présentant toujours un bon niveau de performances, des parties usées constituant la couche amovible (2) servant également de couche décorative.

De cette manière, il est possible de renouveler plus souvent le revêtement de sol et à moindre coût, avec une immobilisation très courte du local.

La couche d'adhésif (4) se présente par exemple sous la forme d'un adhésif poissant, c'est-à-dire dans un état visqueux et collant, notamment dans l'état qu'il se trouve avant de devenir tackant, ou bien sous la forme d'un adhésif double faces comprenant un support, tel qu'un non-tissé, une feuille ou une trame à mailles fines, enduit de chaque côté d'une colle différente. La colle de la couche d'adhésif (4) qui est destinée à être en contact avec l'envers de la couche amovible (2) ou bien l'adhésif poissant comprend un pouvoir d'adhérence à l'envers de la couche amovible (2) supérieur à 1 N/mm.

Avantageusement, la couche amovible (2) comprend une couche d'équilibrage (7) de la couche amovible (2), ladite couche d'équilibrage (7) étant liée à la face envers de la couche de surface (2a). Dans ce cas, la colle de la couche d'adhésif (4) qui est destinée à être en contact avec l'envers de la couche d'équilibrage (7) ou bien l'adhésif poissant comprend alors un pouvoir d'adhérence à l'envers de la couche d'équilibrage (7) supérieur à 1 N/mm.

Des tests ont été réalisés par le Demandeur, avec deux exemples de structures multicouches différents, à savoir une structure #1 et une structure #2, dans lesquelles plusieurs types de couches d'adhésifs (4) ont été testés, afin de mesurer la valeur de résistance au pelage de ladite couche d'adhésif (4) à la sous-couche (3).

La structure #1 testée comprend, dans le sens de la couche amovible (2) vers la sous-couche (3) :
- une couche de surface (2a) en PVC ;
- une couche d'équilibrage (7) en PVC présentant un envers lisse en regard de la couche d'adhésif (4) ;
- une couche d'adhésif (4) ;
- une sous-couche (3) comprenant un pli (8) constitué :
   - d'une couche formée par un film de Polyéthylène téréphtalate (PET) ;
   - d'une couche adhésive ;
   - d'une couche comprenant des électrodes conductrices, par exemple fabriquées dans un feuillard de cuivre ou d'aluminium ;
   - d'une couche adhésive ;
   - d'une couche formée par un film de Polyéthylène téréphtalate (PET).

La structure #2 présente la même structure que la structure #1, à l'exception que la couche d'équilibrage (7) présente un envers texturé en regard de la couche d'adhésif (4). Cet envers texturé est obtenu par toute technique appropriée, par exemple l'envers de la couche d'équilibrage (7) est expansé sur une grille pendant la fabrication pour lui donner une texture.

Les tests ont été effectués avec des structures multicouches dont les sous-couches (3) ont été collées sur un support en fibrociment avec une couche de colle acrylique conventionnelle, telle que par exemple celle commercialisée sous la Marque Adhesi-tech 522^{®} par la société Bostik. La valeur de résistance au pelage de la colle acrylique au support fibrociment est supérieure à 1 N/mm.

Les résultats des tests effectués sont repris dans les tableaux ci-dessous :

| **Structure #1** | | | | |
|---|---|---|---|---|
| | **valeur de résistance au pelage (N/mm)** | | | |
| **Type d'adhésif (4)** | **Test 1** | **Test 2** | **Test 3** | **moyenne** |
| Adhésif double faces comprenant une colle commercialisée sous la Marque « Sigan 2 » par la société UZIN, déposée sur la face en contact avec la sous-couche (3) | 0,53 | 0,71 | 0,71 | **0,65** |
| Adhésif double faces comprenant une colle commercialisée sous la Marque « Fix & Free » par la société Gergonne, déposée sur la face en contact avec la sous-couche (3) | 0,58 | 0,55 | 0,65 | **0,59** |
| Adhésif double faces comprenant une colle commercialisée sous la Marque « D300 » par la société Gerflor, déposée sur la face en contact avec la sous-couche (3) | 0,04 | 0,04 | 0,03 | **0,04** |
| Adhésif poissant commercialisé sous la Marque « Adhesi-tech 542 » par la société Bostik | 0,2 | 0,25 | 0,18 | **0,21** |

| **Structure #2** | | | | |
|---|---|---|---|---|
| | **valeur de résistance au pelage (N/mm)** | | | |
| **Type d'adhésif (4)** | **Test 1** | **Test 2** | **Test 3** | **moyenne** |
| Adhésif double faces comprenant une colle commercialisée sous la Marque « Sigan 2 » par la société | 0,11 | 0,17 | 0,19 | **0,16** |
| UZIN, déposée sur la face en contact avec la sous-couche (3) | | | | |
| Adhésif double faces comprenant une colle commercialisée sous la Marque « Fix & Free » par la société Gergonne, déposée sur la face en contact avec la sous-couche (3) | 0,15 | 0,19 | 0,24 | **0,19** |
| Adhésif double faces comprenant une colle commercialisée sous la Marque « D300 » par la société Gerflor, déposée sur la face en contact avec la sous-couche (3) | 0,03 | 0,03 | 0,03 | **0,03** |
| Adhésif poissant commercialisé sous la Marque « Adhesi-tech 542 » par la société Bostik | 0,08 | 0,09 | 0,09 | **0,09** |

Il ressort de ces tests que la couche amovible (2) peut être retirée correctement par pelage dans toutes les structures testées. En pratique, les structures qui présentent des valeurs de pelage supérieures à 0,20 N/mm et inférieures à 1 N/mm sont préférées car elles présentent une meilleure résistance au fort trafic.

D'autres tests ont été effectués par le Demandeur en vue de mesurer la résistance au poinçonnement et de déterminer la valeur de l'enfoncement en mm.

Les tests ont été effectués d'une part, avec des structures multicouches dont les sous-couches (3) ont été collées sur un support en fibrociment avec une couche de colle acrylique conventionnelle, telle que par exemple celle commercialisée sous la Marque Adhesi-tech 522^{®} par la société Bostik, dont la valeur de résistance au pelage de la colle acrylique au support fibrociment est supérieure à 1 N/mm, et, d'autre part, avec les structures multicouches dont les sous-couches ont été simplement posées sur une plaque métallique, sans collage.

Les résultats des tests effectués sont repris dans les tableaux ci-dessous :

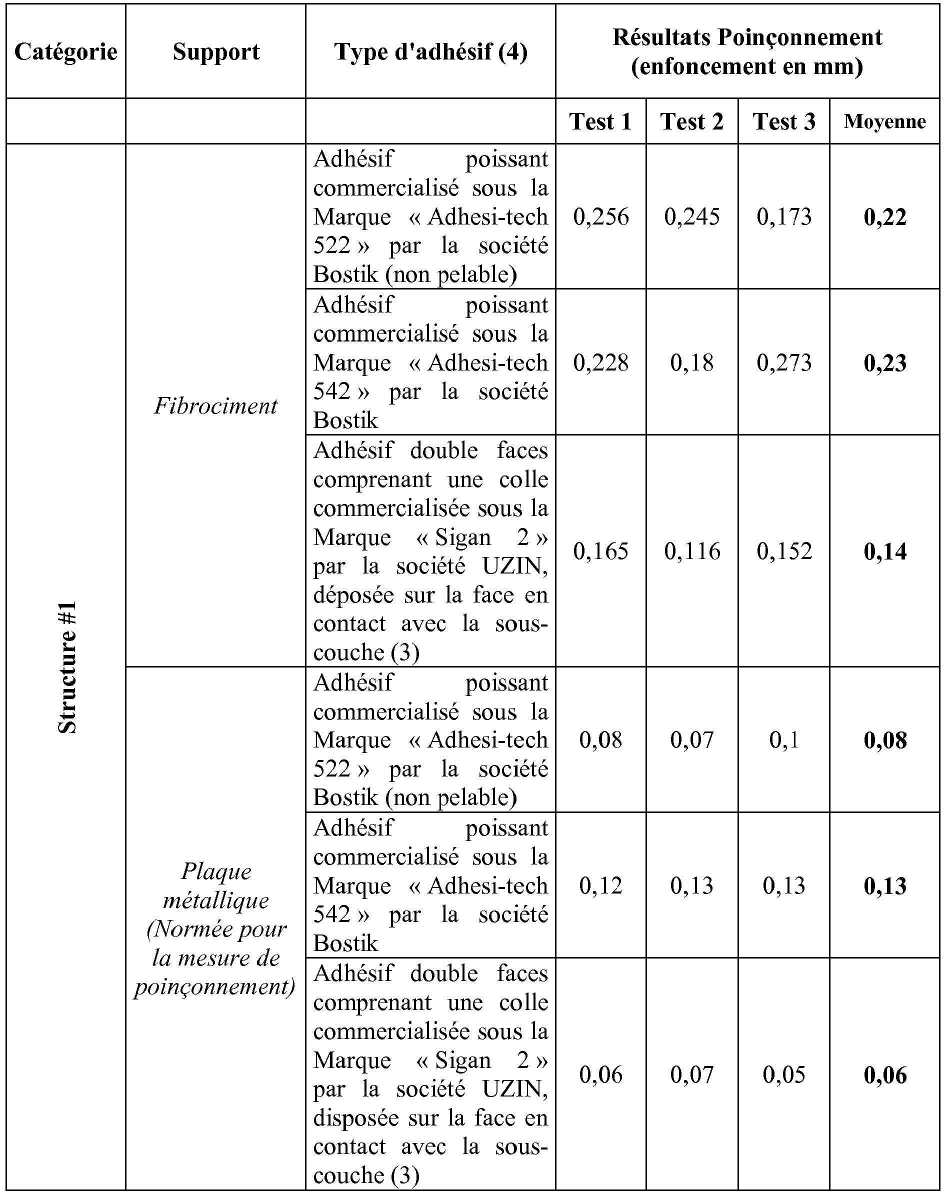

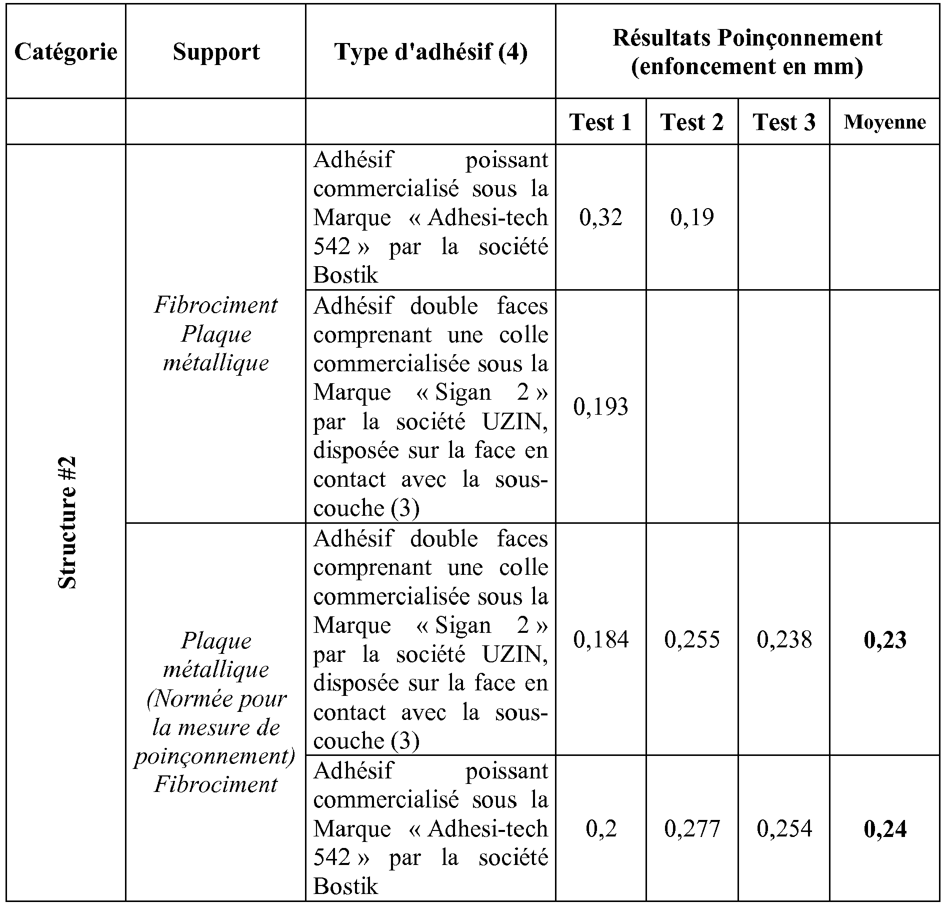

Il ressort de ces tests que la couche amovible (2) présente des valeurs de poinçonnement correctes, voire très bonnes, permettant un classement U4P3 selon la norme français UPEC, lorsque l'enfoncement mesuré est inférieur à 0,2 mm, c'est-à-dire pour la majorité des structures testées.

D'une manière plus générale, la couche d'adhésif (4) comprend des copolymères acryliques, des agents mouillants, un antimousse. La couche adhésive bien connue de l'état de la technique et disponible sur le marché ne sera pas décrite plus en détail.

La couche d'adhésif (4) permet de pouvoir retirer la couche amovible (2), sans laisser de trace sur la sous-couche (3). Ainsi, une fois la couche amovible (2) retirée, la sous-couche (3) est propre, sans poussière, sans primarisation, possède une bonne planéité, sans dégradation, pour la pose d'une nouvelle couche amovible (2) de surface et de décor.

Selon une caractéristique avantageuse de la présente invention, la couche d'adhésif (4) est compatible et garde son pouvoir d'adhérence avec une sous-couche (3) présentant une faible quantité de plastifiant. En effet, pour garantir une résistance optimale au test de poinçonnement, il est nécessaire que la sous-couche (3) présente une faible quantité de plastifiant. A l'inverse, une quantité trop forte de plastifiant, notamment au-dessus de 35% rend la sous-couche (3) trop souple et entraine une mauvaise résistance au poinçonnement et des risques d'endommagement des électrodes ou des capteurs. La sous-couche (3) présente, en effet, entre 10 et 35% de plastifiant, et de préférence entre 10 et 30%. Cette faible quantité de plastifiant est aussi avantageuse car la sous-couche (3) n'est pas collante, contrairement avec une forte quantité de plastifiant par exemple au-dessus de 35% et plus particulièrement de l'ordre de 60%, de sorte qu'après retrait de la couche amovible (2), la sous-couche (3) est propre et réutilisable directement, sans nécessité d'opération de lavage.

La couche amovible (2) et la sous-couche (3) peuvent avoir des compositions et des structures diverses et variées en fonction de l'application considérée.

A titre d'exemple, la structure multicouche (1) décrite ci-après est destinée à être utilisée par exemple dans des hôpitaux ou dans le milieu scolaire. La structure multicouche (1) présente de bonnes performances mécaniques en termes de résistance au poinçonnement et au roulage, et intègre, par exemple, des fonctions intelligentes telles que des fonctions de détection de personnes, de chauffage, ou de récupération d'énergie par exemple.

A cet effet, la couche amovible (2) comprend une couche de surface (2a) en matière plastique tel qu'en polychlorure de vinyle comprenant une épaisseur comprise entre 0.2 et 1 mm. Cette couche de surface (2a) peut être teintée dans la masse et comporter des granulés de décor dans toute son épaisseur. De préférence, et pour satisfaire par exemple au classement U4 P3 de la norme française UPEC, la couche de surface (2a) comprend une densité comprise entre 1.4 et 1.6, un enfoncement rémanent inférieur à 0.10 mm, et une résistance à la chaise à roulettes à 25000 cycles. La couche de surface (2a) peut être transparente et associée à une couche de décor (5) imprimée sur sa face envers, à savoir sur sa face en regard avec la sous-couche (3). La couche de décor (5) imprimée comprend une épaisseur comprise entre 0.07 et 0.5 mm.

La couche de surface (2a) est ensuite liée, par toute technique appropriée, telle que par pressage à chaud, avec une première couche d'équilibrage (7). La première couche d'équilibrage (7) est par exemple réalisée en Polychlorure de Vinyle (PVC) plastifiée obtenue par broyage et calandrage ou par enduction de plastisol PVC. La première couche d'équilibrage (7) comprend, par exemple, une densité comprise entre 1 et 2, et comprend, par exemple, une épaisseur comprise entre 0.2 et 1 mm. La première couche d'équilibrage (7) permet de maintenir la couche amovible (2) à plat lorsque celle-ci est appliquée sur une sous-couche (3) lors de la rénovation, garantissant une pose est rapide et aisée.

Une première armature de renfort en textile (6) est noyée dans la face envers de la couche d'équilibrage (7). Cette première armature de renfort (6) se présente par exemple sous la forme d'une grille ou d'un quadrillage de fils textiles d'épaisseur négligeable, ou bien d'un voile de verre. Les fils textiles de ladite première armature de renfort (6) sont, de préférence, espacés les uns des autres de 3 mm, selon les dimensions longitudinale et transversale, et comprennent une masse linéique comprise entre 20 g/m et 70 g/m, avantageusement entre 35 g/m et 50 g/m. La première armature de renfort (6) permet d'augmenter les performances mécaniques et la résistance au poinçonnement et au roulage du revêtement de sol. La première armature de renfort (6) assure une stabilité dimensionnelle du revêtement dans le temps. Selon une autre technique, l'armature de renfort (6) peut être noyée dans la face supérieure de la couche d'équilibrage (7), laquelle couche d'équilibrage (7) est ensuite rendue solidaire de la face envers de la couche de surface (2a)

L'assemblage de toutes ces couches et armature forme la couche amovible (2) en tant que telle qui peut être retirée facilement étant donné son caractère pelable.

A cet effet, la couche d'adhésif (4) est déposée, par exemple par complexage à froid sur la face envers de la couche amovible (2), notamment celle destinée à être appliquée sur la sous-couche (3).

En ce qui concerne la sous-couche (3) et en référence aux figures 1 à 3, celle-ci comprend au moins une couche d'équilibrage (3a, 3b) en matière plastique, tel que du polychlorure de vinyle. La couche d'équilibrage (3a, 3b) comprend de préférence une épaisseur de 2 mm. De préférence, et pour satisfaire par exemple au classement U4 P3 de la norme française UPEC, la couche d'équilibrage (3a, 3b) présente une dureté shore A comprise entre 80 et 95. Cette couche d'équilibrage (3a, 3b) peut également être en mousse de PVC ou de polyuréthane pour conférer des propriétés d'isolation acoustique au revêtement de sol. Dans le cas où cette couche d'équilibrage (3a, 3b) est en mousse, sa densité est comprise entre 0,2 et 0,9.

Selon la figure 1, cette couche d'équilibrage (3a) est ensuite liée, par pressage à chaud par exemple, à la face inférieure du pli (8) comportant soit des électrodes, soit des capteurs en fonction de l'application considérée. Le fait de lier la couche d'équilibrage (3a) à la face inférieure du pli (8) permet de disposer le pli (8) au plus proche de la couche amovible (2) afin d'améliorer les performances de chauffage du pli (8), notamment si ledit pli (8) comprend des électrodes destinées à chauffer le local dans lequel est disposée la structure multicouche selon l'invention.

Selon la figure 2, cette couche d'équilibrage (3a) est ensuite liée, par pressage à chaud par exemple, à la face supérieure du pli (8) comportant soit des électrodes, soit des capteurs en fonction de l'application considérée. Le fait de lier la couche d'équilibrage (3a) à la face supérieure du pli (8) permet notamment de protéger au mieux le pli (8) des risques de poinçonnement, d'indentation ou de coupure en provenance de la couche amovible (2). De cette manière, si le pli (8) comprend des électrodes destinées à la détection, les performances de détection ne sont pas dégradées dans le temps.

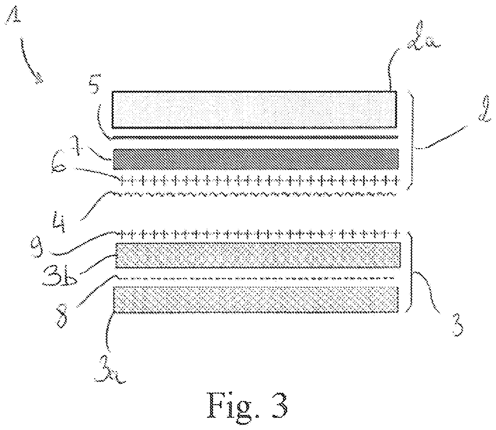

Selon la figure 3, une première couche d'équilibrage (3a) ainsi qu'une deuxième couche d'équilibrage (3b) sont ensuite liées, par pressage à chaud par exemple, aux faces inférieure et supérieure du pli (8) comportant soit des électrodes, soit des capteurs en fonction de l'application considérée. De cette façon, le pli (8) est noyé entre deux couches d'équilibrages (3a, 3b). Le fait de lier deux couches d'équilibrage (3a, 3b) aux faces inférieure et supérieure du pli (8) permet notamment d'obtenir un compromis en termes de protection du pli (8) des contraintes de poinçonnement, et de chauffage du local dans lequel est disposée la structure multicouche selon l'invention.

Les électrodes peuvent être sous la forme d'un circuit PCB souple, ou peuvent être obtenues en imprimant directement sur la couche d'équilibrage (3a, 3b) ou sur une couche en PVC que comprend le pli, avec de l'encre conducteur, par exemple de l'encre avec des particules d'argent.

L'épaisseur des électrodes est, de préférence, comprise entre 10 µm et 100 µm. Une épaisseur de 12µm à 35µm permet d'avoir une résistance faible et d'optimiser les pertes ohmiques.

A titre d'exemple, le pli comporte une épaisseur totale d'environ de 110µm et comprend selon une forme de réalisation particulière, successivement et dans le sens de la couche amovible (2) vers la sous-couche (3) :
- une couche formée par un film de Polyéthylène téréphtalate (PET) ;
- une couche adhésive ;
- une couche comprenant des électrodes conductrices, par exemple fabriquées dans un feuillard de cuivre ou d'aluminium ;
- une couche adhésive ;
- une couche diélectrique permettant d'isoler électriquement le pli.

D'une manière facultative, la sous-couche (3) comprend une couche barrière destinée à être en contact avec la couche d'adhésif (4) afin d'éviter que les plastifiants de la sous-couche (3) migrent vers la couche d'adhésif (4) lorsque la couche amovible (2) est liée à la sous-couche (3). Cette fonction peut notamment être assurée par le film PET intégré dans le pli (8) et qui recouvre les électrodes. A la place d'un film PET, il est aussi possible d'utiliser un film en polypropylène, polyéthylène, ou encore Polyvinylidène fluoride.

Selon une forme de réalisation particulière, la structure multicouche (1) selon l'invention présente la structure suivante :
- couche amovible (2) ;
- couche d'adhésif (4) ;
- sous-couche (3) comprenant :
   ^{∗} film PET ;
   ^{∗} pli (8) comportant des électrodes conductrices fabriquées dans un feuillard de cuivre ;
   ^{∗} couche d'équilibrage (3a) en PVC.

La sous-couche (3) peut être obtenue par laminage à chaud. Le film PET supporte les électrodes et est laminé à chaud à 150°C environ avec la couche d'équilibrage (3a) en PVC.

La sous-couche (3) peut être obtenue par enduction. Le film PET supporte les électrodes et est enduit avec un plastisol PVC chauffé à 205°C environ pour former la couche d'équilibrage (3a).

La sous-couche (3) peut être obtenue par collage à chaud bien connu de l'acronyme Anglo-Saxon « hotmelt ». Le film PET supporte les électrodes et reçoit une colle à chaud à 80°C sur laquelle est déposée un film PVC formant la couche d'équilibrage (3a).

Selon une forme de réalisation particulière, une deuxième armature de renfort (9) similaire à la première armature de renfort (6) de la couche amovible (2), est noyée dans la face supérieure du pli (8).

L'assemblage de toutes ces couches et armature forme la sous-couche (3) en tant que telle qui peut rester sur le support d'origine lors de la rénovation du revêtement de sol.

L'agencement de la couche amovible (2) et de la sous-couche (3) sont données à titre d'exemples non limitatifs. Il est bien évident qu'en fonction de l'application considérée, des couches peuvent venir se rajouter ou se soustraire à la structure multicouche (1) décrite. L'essentiel réside dans le caractère pelable de la couche amovible (2) par rapport à la sous-couche (3).

La couche amovible (2) est ensuite appliquée sur la sous-couche (3) et associée à celle-ci pour former la structure multicouche (1) selon l'invention.

Il est également possible de ne pas associer la couche amovible (2) à la sous-couche (3) et d'agencer un film protecteur (non représenté) sur la couche d'adhésif (4) de la couche amovible (2). De cette manière, cette couche amovible (2) pourvue du film protecteur pourra être utilisée lors de la rénovation en tant que couche amovible (2) de remplacement.

Il ressort de ce qui précède que l'invention fournit bien une structure multicouche (1) pour la réalisation d'un revêtement de sol ou similaire, en pose collée, permettant d'atteindre des niveaux de classement élevés en termes de résistance au trafic et d'étanchéité, tout en garantissant une rénovation rapide, sans nuisance, et peu onéreuse de la structure multicouche (1), et qui intègre des fonctions électriques et/ou électroniques, tout en garantissant des fonctions acoustiques et/ou mécaniques performantes.

## Revendications

1. Structure multicouche (1) pour la réalisation d'un revêtement de sol ou similaire, ladite structure multicouche (1) comprend une couche amovible (2) constituée d'au moins une couche de surface (2a) en matière plastique, ladite couche amovible (2) étant liée à une sous-couche (3) destinée à être collée sur le sol ou similaire, la sous-couche (3) est constituée d'au moins un pli (8) comportant des électrodes ou des capteurs électroniques intégrant des fonctions de chauffage, de détection de personnes, ou de récupération d'énergie, ***caractérisée* en ce que** la couche amovible (2) comprend une couche d'adhésif (4) sur sa face envers en regard avec la sous-couche (3), le pouvoir d'adhérence de la couche d'adhésif (4) à la couche amovible (2) étant supérieur au pouvoir d'adhérence de la couche d'adhésif (4) à la sous-couche (3) de sorte que la couche amovible (2) est pelable pour pouvoir être retirée et remplacée.

2. Structure multicouche (1) selon la revendication 1, ***caractérisée* en ce que** le pouvoir d'adhérence de la couche d'adhésif (4) à la sous-couche (3) est inférieur à 1 N/mm en pelage à 180 degrés selon la norme NFEN ISO 24345.

3. Structure multicouche (1) selon l'une quelconque des revendications 1 à 2, ***caractérisée* en ce que** la couche d'adhésif (4) intègre dans sa composition des résines acryliques à base solvant résistantes à la migration de plastifiants.

4. Structure multicouche (1) selon l'une quelconque des revendications 1 à 3, ***caractérisée* en ce que** la couche amovible (2) comprend une couche d'équilibrage (7) de la couche amovible (2), ladite couche d'équilibrage (7) étant liée à la face envers de la couche de surface (2a).

5. Structure multicouche (1) selon la revendication 4, ***caractérisée* en ce que** la couche amovible (2) comprend une armature de renfort en textile noyée entre la couche de surface (2a) et la couche d'équilibrage (7).

6. Structure multicouche (1) selon l'une quelconque des revendications 1 à 5, ***caractérisée* en ce que** la sous-couche (3) comprend au moins une couche d'équilibrage (3a) de la sous-couche (3), liée à la face supérieure ou inférieure du pli (8).

7. Structure multicouche (1) selon la revendication 6, ***caractérisée* en ce que** la couche d'équilibrage (3a) de la sous-couche (3) est liée à la face inférieure du pli (8), et la sous-couche (3) comprend une deuxième couche d'équilibrage (3b) liée à la face supérieure du pli (8).

8. Structure multicouche (1) selon l'une quelconque des revendications 1 à 7, ***caractérisée* en ce que** la sous-couche (3) est réalisée en matière plastique et comprend entre 10 et 35% de plastifiant.

9. Structure multicouche (1) selon l'une quelconque des revendications 1 à 8, ***caractérisée* en ce que** le pli (8) comprend successivement dans le sens de la couche amovible (2) vers la sous-couche (3) :
- une couche formée par un film de Polyéthylène téréphtalate ;
- une couche adhésive ;
- une couche comprenant des électrodes conductrices ;
- une couche adhésive ;
- une couche diélectrique permettant d'isoler électriquement le pli.

10. Structure multicouche (1) selon la revendication 9, ***caractérisée* en ce que** les électrodes conductrices sont réalisées dans un feuillard de cuivre ou d'aluminium.

11. Structure multicouche (1) selon l'une quelconque des revendications 1 à 10, ***caractérisée* en ce que** la sous-couche (3) comprend une armature de renfort en textile (9) noyée dans la face supérieure du pli (8).

12. Couche de matière plastique destinée à être appliquée sur une sous-couche (3) d'une structure multicouche (1) conforme à l'une quelconque des revendications 1 à 11, ***caractérisée* en ce qu'**elle comprend une face envers comprenant une couche d'adhésif (4) dont le pouvoir d'adhérence à la couche de matière plastique est supérieur au pouvoir d'adhérence à la sous-couche (3) avec laquelle l'adhésif est destiné à venir en contact, ladite couche d'adhésif (4) étant recouverte d'un film protecteur pelable.

## Patentansprüche

1. Mehrschichtige Struktur (1) zur Herstellung eines Bodenbelags oder ähnlichem, diese mehrschichtige Struktur (1) enthält eine ablösbare Schicht (2), bestehend aus mindestens einer Oberflächenschicht (2a) aus Kunststoff, wobei diese ablösbare Schicht (2) mit einer Unterschicht (3) verbunden ist, die auf den Boden oder ähnliches geklebt werden soll, diese Unterschicht (3) besteht aus mindestens einer Falte (8), die Elektroden oder elektronische Sensoren enthält, in die Funktionen wie Heizung, Personenerkennung oder Energierückgewinnung integriert sind, ***dadurch gekennzeichnet, dass*** die ablösbare Schicht (2) eine Haftschicht (4) auf ihrer Rückseite, gegenüber der Unterschicht (3), enthält, das Haftvermögen der Haftschicht (4) an der ablösbaren Schicht (2) ist dabei höher als das Haftvermögen der Haftschicht (4) an der Unterschicht (3) so dass die ablösbare Schicht (2) abgezogen werden kann um entfernt und ersetzt zu werden.

2. Mehrschichtige Struktur (1) nach Anspruch 1, ***dadurch gekennzeichnet, dass*** das Haftvermögen der Haftschicht (4) an der Unterschicht (3) kleiner ist als 1 N/mm beim Abschälen mit 180 Grad nach Norm NFEN ISO 24345.

3. Mehrschichtige Struktur (1) nach einem beliebigen der Ansprüche 1 bis 2, ***dadurch gekennzeichnet, dass*** die Haftschicht (4) in ihrer Zusammensetzung Acrylharze auf Basis von gegenüber der Weichmacherwanderung beständigen Lösungsmitteln enthält.

4. Mehrschichtige Struktur (1) nach einem beliebigen der Ansprüche 1 bis 3, ***dadurch gekennzeichnet, dass*** die ablösbare Schicht (2) eine Ausgleichsschicht (7) der ablösbaren Schicht (2) enthält, diese Ausgleichsschicht (7) ist mit der Rückseite der Oberflächenschicht (2a) verbunden.

5. Mehrschichtige Struktur (1) nach Anspruch 4, ***dadurch gekennzeichnet, dass*** die ablösbare Schicht (2) eine textile Verstärkungseinlage enthält, die zwischen der Oberflächenschicht (2a) und der Ausgleichsschicht (7) eingebettet ist.

6. Mehrschichtige Struktur (1) nach einem beliebigen der Ansprüche 1 bis 5, ***dadurch gekennzeichnet, dass*** die Unterschicht (3) mindestens eine Ausgleichsschicht (3a) der Unterschicht (3) enthält, die mit der Ober- oder Unterseite der Falte (8) verbunden ist.

7. Mehrschichtige Struktur (1) nach Anspruch 6, ***dadurch gekennzeichnet, dass*** die Ausgleichsschicht (3a) der Unterschicht (3) mit der Unterseite der Falte (8) verbunden ist und die Unterschicht (3) eine zweite Ausgleichsschicht (3b) enthält, die mit der Oberseite der Falte (8) verbunden ist.

8. Mehrschichtige Struktur (1) nach einem beliebigen der Ansprüche 1 bis 7, ***dadurch gekennzeichnet, dass*** die Unterschicht (3) aus Kunststoff hergestellt wird und zwischen 10 und 35% Weichmacher enthält.

9. Mehrschichtige Struktur (1) nach einem beliebigen der Ansprüche 1 bis 8, ***dadurch gekennzeichnet, dass*** die Falte (8) aufeinanderfolgend in Richtung der ablösbaren Schicht (2) zur Unterschicht (3) hin enthält:
- eine aus einer Polyethylenterephthalatfolie gebildete Schicht;
- eine Haftschicht;
- eine Schicht mit leitenden Elektroden;
- eine Haftschicht;
- eine dielektrische Schicht mit der die Falte elektrisch isoliert werden kann.

10. Mehrschichtige Struktur (1) nach Anspruch 9, ***dadurch gekennzeichnet, dass*** die leitenden Elektroden aus einer Kupfer- oder Aluminiumfolie ausgeführt werden.

11. Mehrschichtige Struktur (1) nach einem beliebigen der Ansprüche 1 bis 10, ***dadurch gekennzeichnet, dass*** die Unterschicht (3) eine textile Verstärkungseinlage (9) enthält, die in der Oberseite der Falte (8) eingebettet ist eingebettet ist.

12. Kunststoffschicht, bestimmt zur Aufbringung einer mehrschichtigen Struktur (1) entsprechend einem beliebigen der Ansprüche 1 bis 11 auf einer Unterschicht (3), ***dadurch gekennzeichnet, dass*** sie eine Rückseite umfasst, die eine Haftschicht (4) enthält, deren Haftvermögen an der Kunststoffschicht höher ist, als das Haftvermögen an der Unterschicht (3) mit der der Kleber in Kontakt kommen soll, diese Haftschicht (4) ist dabei mit einer ablösbaren Schutzfolie bedeckt.

## Claims

1. Multi-layer structure (1) for the realization of a floor covering or similar, said multi-layer structure (1) comprises a removable layer (2) made up of at least one surface layer (2a) of plastic material, said removable layer (2) being linked to an underlayer (3) intended to be glued to the floor or similar, the underlayer (3) is made up of at least one ply (8) comprising electrodes or electronic sensors integrating functions of heating detection of persons, or energy recovery, ***characterized* in that** the removable layer (2) comprises a layer of adhesive (4) on its back side facing the underlayer (3), the power of adhesion of the layer of adhesive (4) to the removable layer (2) being greater than the power of adhesion of the layer of adhesive (4) to the underlayer (3) so that the removable layer (2) can be peeled off in order to be able to be withdrawn and replaced

2. Multilayer structure (1) according to claim 1, ***characterized* in that** the adhesive power of the adhesive layer (4) to the underlayer (3) is less than 1 N/mm in peeling at 180 degrees according to the NFEN ISO 24345 standard.

3. Multilayer structure (1) according to any of claims 1 to 2, ***characterized* in that** the adhesive layer (4) incorporates in its composition solvent-based acrylic resins resistant to plasticizer migration.

4. Multilayer structure (1) according to any one of claims 1 to 3, ***characterized* in that** the removable layer (2) comprises a balancing layer (7) of the removable layer (2), said balancing layer (7) being bonded to the reverse side of the surface layer (2a).

5. Multilayer structure (1) according to claim 4, ***characterized* in that** the removable layer (2) comprises a textile reinforcement embedded between the surface layer (2a) and the balancing layer (7).

6. Multilayer structure (1) according to any one of claims 1 to 5, ***characterized* in that** the underlayer (3) comprises at least one balancing layer (3a) of the underlayer (3), bonded to the upper or lower side of the ply (8).

7. Multilayer structure (1) according to claim 6, ***characterized* in that** the balancing layer (3a) of the underlayer (3) is bonded to the lower side of the ply (8), and the underlayer (3) comprises a second balancing layer (3b) bonded to the upper side of the ply (8).

8. Multilayer structure (1) according to any of claims 1 to 7, ***characterized* in that** the underlayer (3) is made of plastic and comprises between 10 and 35% plasticizer.

9. Multilayer structure (1) according to any one of claims 1 to 8, ***characterized* in that** the ply (8) comprises successively in the direction from the removable layer (2) to the underlayer (3):
- a layer formed by a Polyethylene terephthalate film;
- an adhesive layer ;
- a layer comprising conductive electrodes;
- an adhesive layer;
- a dielectric layer for electrically insulating the ply.

10. Multilayer structure (1) according to claim 9, ***characterized* in that** the conductive electrodes are made of a copper or aluminum foil.

11. Multilayer structure (1) according to any one of claims 1 to 10, ***characterized* in that** the underlayer (3) comprises a textile reinforcement (9) embedded in the upper face of the ply (8).

12. Plastic layer intended to be applied to an underlayer (3) of a multilayer structure (1) according to any one of claims 1 to 11, ***characterized* in that** it comprises a reverse side comprising a layer of adhesive (4) whose power of adhesion to the plastic layer is greater than its power of adhesion to the underlayer (3) with which the adhesive is intended to come into contact, the said layer of adhesive (4) being covered with a peelable protective film.
